# EUROPÄISCHE PATENTANMELDUNG

(11) **EP 1 757 246 A1**
(43) Veröffentlichungstag der Anmeldung: **28.02.2007**
(21) Anmeldenummer: 05405488.7
(22) Anmeldetag: 22.08.2005
(51) Int. Cl.: A61C 8/00

(54) **Aufbau für ein Zahnimplantat**

(71) Anmelder: Novident SA, 1700 Fribourg (CH)
(72) Erfinder: Schulz, Volker, 78052 VS-Villingen (DE)
(74) Vertreter: AMMANN PATENTANWÄLTE AG BERN

(57) **Zusammenfassung**

Der Aufbau (9) für ein Zahnimplantat weist ein Verbindungsteil (11) zur Befestigung an das Zahnimplantat und einen Pfosten (12) mit einer Rille (14) auf. In einer Ausführungsform ist das Verbindungsteil und der Pfosten einstückig gefertigt und der Aufbau als Hülse ausgebildet.

Ein solcher Aufbau ermöglicht eine vielfältige Weiterbearbeitung und die Verwendung von aufschnappbaren Elementen, insbesondere die Verwendung einer Snap-on-Kappe, die als Handhabungselement oder als Basis bei der Kronenherstellung dienen kann.

## Beschreibung

Die vorliegende Erfindung bezieht sich auf einen Aufbau für ein Zahnimplantat sowie auf eine Vorrichtung zur Handhabung des Aufbaus und Weiterverarbeitung.

Ein Aufbau für ein Zahnimplantat ist aus der US-A-5 549 475 bekannt. Der dort offenbarte Aufbau besteht aus einen im Implantat eingeschraubten Einsatz, auf den ein zylindrischer Pfosten mit einer einstückig daran angeordneten Kappe befestigt ist.

Es ist von diesem Stand der Technik ausgehend eine erste Aufgabe der vorliegenden Erfindung, einen Aufbau für ein Zahnimplantat zu schaffen, der relativ einfach aufgebaut ist und die nachfolgenden Arbeitsgänge vereinfacht. Diese Aufgabe wird mit einem Aufbau gemäss Patentanspruch 1 gelöst.

Es ist eine weitere Aufgabe der Erfindung, eine Vorrichtung zur Handhabung des Aufbaus anzugeben, die auch für weitere Verarbeitungschritte und Anwendungen verwendbar ist. Diese Aufgabe wird mit der Vorrichtung gemäss Patentanspruch 11 gelöst.

Weitere Vorteile, wie z. B. fördernde Massnahmen für das Anwachsen des Bindegewebes, sind in den abhängigen Ansprüchen definiert.

Die Erfindung wird im Folgenden anhand von Zeichnungen von Ausführungsbeispielen näher erläutert werden.
- Fig. 1: zeigt ein Zahnimplantat in Draufsicht,
- Fig. 1A: zeigt eine Ansicht von links der Fig. 1,
- Fig. 1B: zeigt einen teilweisen Schnitt der Fig. 1,
- Fig. 2: zeigt einen erfindungsgemässen Aufbau für das Zahnimplantat von Fig. 1 in Frontansicht,
- Fig. 3: zeigt den Aufbau gemäss dem Schnitt III - III in Fig. 2,
- Fig. 4: zeigt eine Halteschraube,
- Fig. 5: zeigt eine Verschlussschraube,
- Fig. 6: zeigt einen mit dem Zahnimplantat verschraubten Aufbau,
- Fig. 7: zeigt eine erfindungsgemässe Snap-on-Kappe in Frontansicht,
- Fig. 8: zeigt die Snap-on-Kappe gemäss der Linie VIII - VIII in Fig. 7,
- Fig. 9: zeigt ein versandfertiges, mit einem Aufbau zusammengesetztes Zahnimplantat und einer Snap-on-Kappe,

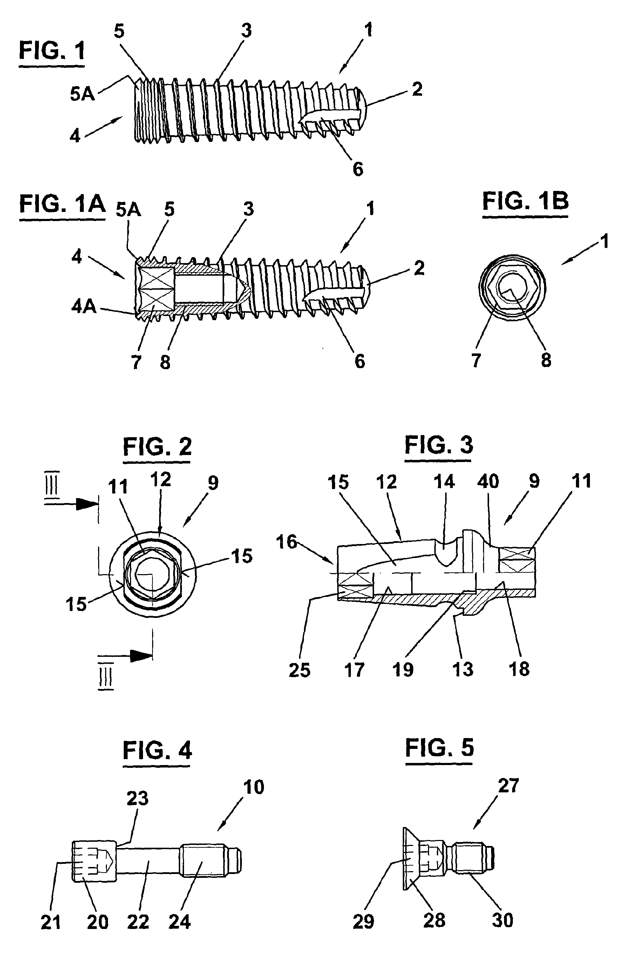

Die Figuren 1, 1A und 1B zeigen beispielsweise ein Zahnimplantat 1, vorzugsweise aus reinem Titan gefertigt, mit dem abgerundeten apikalen Ende 2, dem progressiven, Mehrfachgewinde 3, in diesem Ausführungsbeispiel ein zweigängiges, selbstschneidendes Gewinde, das sich vom apikalen Ende her nach dem anderen, zervikalen Ende 4 hin verbreitert und woran sich ein Mikro-Gewinde 5 anschliesst, ebenfalls ein Mehrfachgewinde, z.B. ein dreigängiges Gewinde.

Dem Mikrogewinde 5 schliesst sich zum zervikalen Ende 4 hin eine Verjüngung 5A an und das Implantat weist eine nach Innen gerichtete Abschrägung 4A auf. Beide Massnahmen ermöglichen ein besseres Anwachsen des Knochens und verhindern somit seine Resorption und fördern das Wachstum des Bindegewebes beim zervikalen Ende des Implantats. Bei der Verwendung eines Aufbaus mit einer gewölbten Stufe wird mit der Verjüngung und der Abschrägung die wirksame biologische Breite vergrössert.

Das abgerundete apikale Ende verhindert beim Eindrehen des Zahnimplantates weitgehend die Verletzung anatomischer Strukturen wie Sinusboden, Nasenboden, Nervus mandibularus oder Schleimhaut.

Das Zahnimplantat 1 weist ferner eine konische Form auf, die sich zum apikalen Ende 2 hin verjüngt, wodurch sich die Primärstabilität im Vergleich zu einer zylindrischen Zahnimplantatform beim Eindrehen in eine gerade Kavität erhöht und zu einer perfekten Adaption im zervikalen Bereich führt.

Das progressive Mehrfachgewinde verbessert die Primärstabilität erheblich. Eine hohe mechanische Primärstabilität ist für die Sofort- bzw. Frühbelastung des Zahnimplantates die wichtigste Voraussetzung. Durch das progressive Gewinde werden Mikrobewegungen des inserierten Zahnimplantats weitgehend verhindert und dadurch dessen Einheilung und die Integration des Knochens gefördert.

Im zervikalen Bereich geht das progressive Gewinde in ein Mehrfach-Mikrogewinde über, um in der Corticalis eine zu hohe Kompression und eine Nekrose zu vermeiden. Das Zahnimplantat weist ferner im apikalen Bereich Schneidnuten 6 auf, beispielsweise zwei, die auch als Entlastungsnuten für die Knochenspäne dienen.

Aus den Figuren 1A und 1B geht hervor, dass das Zahnimplantat am zervikalen Ende einen Innensechskant 7 aufweist, dem sich eine Bohrung 8 mit Gewinde anschliesst.

Die Figuren 2 und 3 zeigen ein Ausführungsbeispiel eines erfindungsgemässen Aufbaus 9, der mittels einer Halteschraube 10, siehe Fig. 4, am Zahnimplantat befestigbar ist. Der Aufbau ist vorzugsweise auch aus Reintitan gefertigt und weist ein als Sechskant ausgebildetes Verbindungsteil 11 auf, der in den Innensechskant 7 des Zahnimplantats passt. Diesem Sechskant 11 schliesst sich ein multifunktionaler Pfosten 12 an, der, vom Verbindungsteil ausgehend, eine Plattform 13 aufweist und sich von dort zum Ende hin verjüngt. Nahe der Plattform 13 befindet sich eine umlaufende Rille 14 und längs des Pfostens sind zwei sich gegenüberliegende Abflachungen 15 angeordnet.

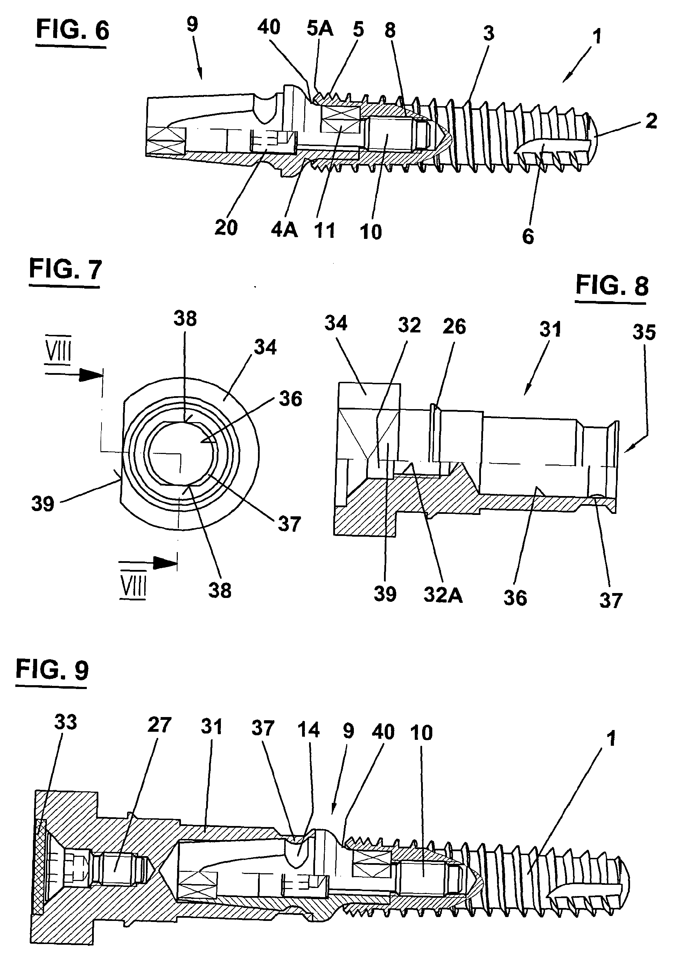

Die Rille im zervikalen Bereich des Pfostens ermöglicht den Einsatz einer Snap-on-Technik für verschiedene Teile, die einfach zu handhaben, sehr präzise und zeitsparend ist. Dies gilt insbesondere für den Transfer, für die Befestigung der provisorischen Krone oder für die Abdrucknahme mit einer multifunktionalen Snap-on-Kappe, siehe Figuren 7 - 9. Ausserdem dient die Rille dazu, beim Einsetzen der endgültigen Versorgung eine optimale Verteilung des Befestigungszementes zu ermöglichen.

Wie aus Fig. 2 hervorgeht, ist der Aufbau als Hülse ausgebildet und weist eine durchgehende Bohrung mit zwei verschiedenen Durchmessern auf. Vom zervikalen Ende 16 aus gesehen ist der Durchmesser der Bohrung 17 grösser als derjenige der anschliessenden Bohrung 18, womit ein Absatz 19 gebildet wird, auf dem sich der Kopf der Halteschraube abstützt. Am zervikalen Ende ist ein Innensechskant 25 angeordnet, mittels welchem das Implantat mit dem Aufbau durch einen Sechskantdreher in den Knochen eingedreht wird.

Die Halteschraube 10 dient dazu, den Aufbau am Zahnimplantat zu befestigen und ist dementsprechend ausgebildet. In Fig. 4 von links nach rechts beschrieben enthält die Halteschraube einen Kopf 20 mit Innensechskant 21, ein zylindrisches Teil 22 und dazwischen einen Absatz 23 und anschliessend an den zylindrischen Teil ein Gewinde 24, das der Bohrung mit Gewinde 8 im Zahnimplantat entspricht.

Aus Fig. 6, eine Zusammenstellung des Zahnimplantats mit dem Aufbau, geht hervor, dass sich die Halteschraube 10 durch den Aufbau hindurch erstreckt und mit einem Sechskantdreher in das Zahnimplantat eingeschraubt werden kann. Dabei stützt sich der Absatz 23 der Halteschraube 10 auf dem Absatz 19 des Aufbaus ab, so dass beim Eindrehen der Halteschraube der Aufbau und das Zahnimplantat zusammengezogen und gesichert wird.

Wie aus der Zusammenstellung von Fig. 6 hervorgeht, besitzt der Aufbaupfosten 12 einen kleineren Durchmesser als das Zahnimplantat, um die Gewebeanlagerung von Weich- und Hartgewebe zu unterstützen und langfristig die Knochenresorption sowie die Infektionsgefahr zu verhindern. Der multifunktionale Pfosten 12 ist einheitlich für alle Zahnimplantate dieses Systems, auch bei unterschiedlichen Durchmessern zu verwenden und dient
a) als Transferpfosten von der doppelt sterilen Verpackung in die vorgebohrte Kavität,
b) zum Eindrehen in die vorgebohrte Kavität,
c) als provisorischer Pfosten und
d) als endgültiger Pfosten.

Die beiden Abflachungen 15 des Pfostens dienen einmal dazu, die Krone verdrehsicher einzuzementieren und ein achsengerechtes Positionieren zu erreichen. Dadurch wird der präzise Transfer ermöglicht.

Die Pfosten sind vorzugsweise kodiert, indem sie z.B. bicolor markiert sind, um Verwechslungen zu vermeiden. Dabei können die flachen Flächen unbearbeitet oder ungefärbt belassen werden.

Um eine stabile Press-Fit-Passung zwischen Aufbau und Zahnimplantat zu erzielen, weist der Sechskant 11 und der Innensechskant 7 des Zahnimplantats eine Konizität von 0,5° - 7° auf. Dadurch wird auch eine exakte Übertragung ermöglicht, weil keine Wackelbewegungen auftreten können, die bei geraden Flächen wegen der notwendigen Toleranz unvermeidbar sind.

Die biologische Breite, der Bindegewegüberzug beim zervikalen Implantatende, beträgt nach Tarnow und anderen Autoren 1,5 bis 3,5 mm. Die vorpräparierte Stufe 40 am Befestigungsteil des Aufbaus von etwa 1,7 bis 2,1 mm, vorzugsweise 1,9 mm, über dem Zahnimplantatende, berücksichtigt diese biologische Breite der Weichteile, was erhebliche Vorteile für den Langzeiterfolg aus ästhetischer und funktioneller Sicht bringt. Dieser Effekt wird durch die Verjüngung 5A und die Abschrägung 4A am zervikalen Implantatende unterstützt.

Der beschriebene Aufbau mit dem Pfosten mit einer umlaufenden Rille für eine Snap-on Technik ist nicht nur für das Eingangs als ein Beispiel beschriebene Implantat vorteilhaft sondern auch für alle andere Typen von Implantaten, wobei dann das Verbindungsteil des Aufbaus entprechend ausgebildet sein muss und anstatt einen Sechskant andere Kopplungs- und Verbindungsmittel aufweisen kann.

Falls das Zahnimplantat ohne Aufbau zunächst einwachsen soll ist es unerlässlich, seine Öffnung 7 und 8 zu verschliessen. Dazu dient die Verschlussschraube 27 von Fig. 5, die einen Versenkkopf 28 mit Innensechskant 29 und ein Gewinde 30 aufweist, das in das Gewinde 8 des Zahnimplantates passt.

In der zum Versand fertigen Verpackung gemäss Fig. 9 ist diese Verschlussschraube am hinteren Teil einer Snap-on-Kappe 31 in einer entsprechenden Ausnehmung 32 eingedreht und mittels einer Abdeckung 33 gesichert.

Die multifunktionale Snap-on-Kappe 31 ist aus einem ausbrennbaren Kunststoff gefertigt und kann, wie ihr Name aussagt, verschiedene Funktionen ausführen:
a) Als Einbringhilfe für den Transfer aus der sterilen Verpackung in die vorgebohrte Kavität und zum Eindrehen von ein bis zwei Umdrehungen dienen.
b) Als Basis für die provisorische Krone dienen, die exakt eingepasst werden kann. Die Befestigung der Krone erfolgt mittels der beschriebenen Snap-on-Technik und provisorischem Zement.
c) Der exakten Übertragung als Abdruckkappe in Verbindung mit vorgefertigten Labor-Zahnimplantaten dienen. Die Form der Snap-on-Kappe ist auf den Pfosten des Aufbaus abgestimmt.
d) Als vormodellierte Kronenbasis für den Zahntechniker und als Basis für die endgültige Versorgung dienen, nach dem der Techniker den Aufnahmering 34 weggefräst hat.

Die Snap-on-Kappe ermöglicht in der Zusammenarbeit von Zahnarzt und Zahntechniker insgesamt einen ökonomischen Arbeitsablauf mit Zeitersparnis und hoher Präzision.

Die Snap-on-Kappe weist an ihrem apikalen Ende 35 eine Bohrung 36 mit Einschnürung 37 auf, die der Rille 14 des Aufbaupfostens entspricht. Somit kann die Snap-on-Kappe auf den Aufbaupfosten aufgeschnappt werden, um dort sicher befestigt zu sein. Ausserdem weist sie an ihrem Umfang einen Wulst 26 auf.

Damit die Snap-on-Kappe als Eindrehhilfe verwendet werden kann, muss sie gegenüber dem Aufbaupfosten drehsicher gehalten werden. Dies wird dadurch erreicht, dass die Snap-on-Kappe in der Innenbohrung 36 zwei sich gegenüberliegende ebene Flächen 38 aufweist, die mit den beiden Abflachungen 15 des Aufbaupfostens zusammenwirken.

Die Verschlussschraube 27 ist in einem Aufnahmering 34 der Kappe eingesetzt, der eine Abflachung 39 aufweist, die der Sicherung einer Krone dient.

Wie aus der Beschreibung und den Zeichnungen hervorgeht, ist der Aufbau der Snap-on-Kappe mit allen ihren Vorteilen weitgehend unabhängig von der Verbindung des Aufbaus mit dem Implantat.

## Patentansprüche

1. Aufbau für ein Zahnimplantat, **dadurch gekennzeichnet, dass** der Aufbau (9) ein Verbindungsteil (11) zur Befestigung an das Zahnimplantat und einen Pfosten (12) mit einer Rille (14) aufweist.

2. Aufbau nach Anspruch 1, **dadurch gekennzeichnet, dass** das Verbindungsteil und der Pfosten einstückig gefertigt sind und der Aufbau als Hülse ausgebildet ist.

3. Aufbau nach Anspruch 1 oder 2, **dadurch gekennzeichnet, dass** das Verbindungsteil als Sechskant (11) ausgebildet ist.

4. Aufbau nach einem der Ansprüche 1 bis 3, **dadurch gekennzeichnet, dass** das an den Sechskant (11) anschliessende Teil (40) des Aufbaus gewölbt und bemessen ist, eine biologische Breite von ca. 2 mm zu erzeugen.

5. Aufbau nach einem der Ansprüche 1 bis 4, **dadurch gekennzeichnet, dass** der Pfosten (12) Abflachungen (15) aufweist.

6. Aufbau nach einem der Ansprüche 1 bis 5, **dadurch gekennzeichnet, dass** der Pfosten (12) an seinem zervikalen Ende (16) einen Innensechskant (25) aufweist.

7. Aufbau nach einem der Ansprüche 1 bis 6 mit einem Zahnimplantat, **dadurch gekennzeichnet, dass** das Zahnimplantat (1) einen Innensechskant (7) aufweist, der wie der Sechskant (11) des Aufbaus eine Konizität von 0,5° bis 7° aufweist.

8. Aufbau nach Anspruch 7, **dadurch gekennzeichnet, dass** das Zahnimplantat mit einem konischen Schraubteil mit einem Gewinde versehen ist, das vom abgerundeten apikalen Ende ausgehend progressiv breiter wird, wobei sich dem progressiven Mehrfachgewinde (3) ein Mehrfach-Mikrogewinde (15) mit kleinerer Steigung anschliesst.

9. Aufbau nach Anspruch 7 oder 8, **dadurch gekennzeichnet, dass** sein Pfosten (12) einen kleineren Durchmesser aufweist als das Zahnimplantat.

10. Aufbau nach einem der Ansprüche 2, 7 bis 9, **dadurch gekennzeichnet, dass** das Zahnimplantat eine Bohrung mit Gewinde (8) aufweist und der Aufbau mittels einer durch den Aufbau reichenden Halteschraube (10) mit entsprechendes Gewinde (24) am Implantat befestigbar ist.

11. Vorrichtung für die Handhabung eines Aufbaus gemäss Anspruch 1, **dadurch gekennzeichnet, dass** die Vorrichtung eine multifunktionale Snap-on-Kappe (31) ist, die in der Rille (14) des Pfostens (12) des Aufbaus einschnappbar ist.

12. Snap-on-Kappe nach Anspruch 11, **dadurch gekennzeichnet, dass** sie an ihrem apikalen Ende (35) eine Bohrung (36) mit einem der Rille (14) am Pfosten (12) entsprechenden Innenwulst (37) und den Abflachungen (15) am Pfosten (12) entsprechenden Innenflächen (38) aufweist.

13. Snap-on-Kappe nach Anspruch 11 oder 12, **dadurch gekennzeichnet, dass** sie am zervikalen Ende eine verschliessbare Bohrung (32) zur Aufnahme einer Verschlussschraube (27) für das Implantat enthält.
